(19) Europäisches Patentamt / European Patent Office / Office européen des brevets

(11) **EP 4 502 028 A1**

(12) **EUROPEAN PATENT APPLICATION**
published in accordance with Art. 153(4) EPC

(43) Date of publication:
**05.02.2025 Bulletin 2025/06**

(21) Application number: **23779242.9**

(22) Date of filing: **03.03.2023**

(51) International Patent Classification (IPC):
**C08J 9/18** (2006.01)

(52) Cooperative Patent Classification (CPC):
**C08J 9/18**

(86) International application number:
**PCT/JP2023/008103**

(87) International publication number:
**WO 2023/189213 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022055440**

(71) Applicant: **JSP Corporation Tokyo 100-0005 (JP)**

(72) Inventor: **YAMANAKA Ryo Yokkaichi-shi, Mie 510-0881 (JP)**

(74) Representative: **Mai Besier European Trademark Attorneys Patentanwälte Kreuzberger Ring 18a 65205 Wiesbaden (DE)**

(54) **METHOD FOR PRODUCING FOAMABLE POLYAMIDE-BASED RESIN PARTICLES, METHOD FOR PRODUCING POLYAMIDE-BASED RESIN FOAMED PARTICLES, AND POLYAMIDE-BASED RESIN FOAMED PARTICLES**

(57)    A method for producing foamable polyamide-based resin particles according to the present invention includes impregnating polyamide-based resin particles with an inorganic physical foaming agent in a gas phase, wherein the polyamide-based resin particles have a water content of at least 2.5 mass% and contain 0.5-10 mass% of carbon black. Foamed polyamide-based resin particles are obtained by heating and foaming the foamable polyamide resin particles.

Fig. 3

I MUD9.7  x40      2 mm

EP 4 502 028 A1

## Description

Technical Field

The present invention relates to a method for producing expandable polyamide-based resin particles, to a method for producing polyamide-based resin expanded beads, and to polyamide-based resin expanded beads.

A polyamide-based resin has high heat resistance and is excellent in wear resistance, chemical resistance, etc. A foamed molded article obtained by foaming a polyamide-based resin has these excellent properties and is light in weight. Therefore, polyamide-based resin foamed molded articles are expected to be used in automobile parts and other applications. For example, Patent Document 1 discloses polyamide-based resin expanded beads that have excellent moldability and are able to give an expanded beads molded article.

Specifically, Patent Document 1 discloses a method for producing pre-expanded beads which includes charging polyamide pellets in a pressure vessel at 10°C, blowing a carbon dioxide gas at 4 MPa therein, allowing the pellets to stand therein for 12 hours to absorb the carbon dioxide gas, transferring the carbon dioxide-impregnated pellets to a foaming device, and blowing air at 200° C into the foaming device for 20 seconds.

Prior Art Document

Patent Document

Patent Document 1: International Publication WO2020/031803

Summary of the Invention

Problems to be solved by the invention

However, the method of Patent Document 1 has problems that an unexpanded portion remains in a center part of the pre-expanded bead and a large variation in cell diameter occurs. Furthermore, when steam is used as the heating medium, expansion itself is liable to become difficult. These problems are considered to be attributed to the fact that it is difficult for the carbon dioxide gas, which is a blowing agent, to be sufficiently impregnated into center regions of the polyamide pellets. On the other hand, if the impregnation time is made sufficiently long, it may be possible to impregnate the center regions of the polyamide pellets with the blowing agent, but in that case, a problem that productivity is significantly reduced is caused.

The present invention has been made in view of the above-mentioned problems, and the objective problem thereof is to provide a method of producing expandable polyamide-based resin particles in which a blowing agent is sufficiently impregnated inside thereof at a lower temperature and/or in a shorter time as compared with those in conventional methods. It is another objective problem of the present invention to provide a method for producing polyamide-based resin expanded beads having uniform closed cells throughout the expanded beads and having a small apparent density. A further objective problem of the present invention is to provide polyamide-based resin expanded beads that can afford a foamed molded article with excellent surface properties, mechanical strength, light weight and heat resistance.

Means for Solving the Problems

In accordance with the present invention there are proved a method for producing expandable polyamide-based resin particles, a method for producing polyamide-based resin expanded beads and a polyamide-based resin expanded bead, as follows.

[1] A method for producing expandable polyamide-based resin particles

comprising impregnating polyamide-based resin particles with an inorganic blowing agent in a gas phase, wherein the polyamide-based resin particles have a water content of 2.5% by mass or more and contain carbon black in an amount of 0.5% by mass or more and 10% by mass or less.

[2] The method according to above [1], wherein said impregnating is carried out at a temperature higher than a temperature at a storage modulus change point of the polyamide-based resin particles.

[3] The method according to above [1] or [2], wherein said impregnating is carried out at a temperature that is higher by 30°C than a temperature at a storage modulus change point of the polyamide-based resin particles and is not higher than 120°C.

[4] The method according to any one of above [1] to [3], wherein said impregnating is carried out at a temperature not lower than 20°C and not higher than 120°C.

[5] The method according to any one of above [1] to [4], wherein the carbon black has a BET specific surface area of 50 $m^2/g$ or more and 200 $m^2/g$ or less.

[6] The method according to any one of above [1] to [5], wherein the polyamide-based resin particles have a water content of 5% by mass or more and 20% by mass or less.

[7] The method according to any one of above [1] to [6], wherein the polyamide-based resin particles are obtained by a process comprising the steps of:

(a) providing carbon black-containing polyamide-based resin pellets having a carbon black content of 0.5% by mass or more and 10% by mass or less, and
(b) moistening the carbon black-containing polyamide-based resin pellets to a water content of 2.5% by mass or more.

[8] A method for producing polyamide-based resin expanded beads, comprising heating the expandable particles according to any one of above [1] to [7] to foam and expand the expandable particles.

[9] An expanded bead having a plurality of cells and comprising a polyamide-based resin and a carbon black,

said carbon black being contained in the expanded bead in an amount of 0.5% by mass or more and 10% by mass or less based on 100% by mass of the expanded bead,
said expanded bead having an apparent density of 100 $kg/m^3$ or more and 800 $kg/m^3$ or less, a closed cell content of 80% or more, an average cell diameter D of the entire cells of the expanded bead and an average cell diameter Dc of the cells positioning in the center region of the expanded bead,
wherein a ratio Dc/D is 0.7 or more and 1.3 or less.

[10] The expanded particle according to above [9], that is obtainable according to the method according to above [8].

Effect of the Invention

According to the method for producing expandable polyamide-based resin particles of the present invention, it is possible to obtain expandable polyamide-based resin particles whose inside is sufficiently impregnated with an inorganic physical blowing agent at a lower temperature and/or in a shorter time than conventional methods. By heating the expandable polyamide-based resin particles using, for example, hot air or an oil bath, it is possible to obtain polyamide-based resin expanded beads having a low apparent density and having uniform closed cells formed throughout the expanded beads. Further, even when the expandable polyamide-based resin particles are heated using steam as a heating medium, polyamide-based resin expanded beads having a small apparent density can be obtained.

Brief Description of the Drawings

FIG. 1 is a graph plotting a change point temperature of the storage modulus of a film formed from polyamide-based resin particles as a function of water content.
FIG. 2 is a graph schematically showing the relationship between the storage modulus of a film formed from polyamide-based resin particles and temperature, which is measured in accordance with JIS K7095(2012).
FIG. 3 is a cross-sectional SEM photograph of the expanded bead obtained in Example 1.
FIG. 4 is a cross-sectional SEM photograph of the expanded bead obtained in Comparative Example 1.
FIG. 5 is a cross-sectional SEM photograph of the expanded bead obtained in Comparative Example 3.

Embodiments of the Invention

The method for producing expandable particles including a polyamide-based resin and the method for producing polyamide-based resin expanded beads of the present invention will be described explained in detail below.

As used herein, "A to B" showing a numerical range is synonymous with "A or more and B or less", and represents a numerical range including A and B, which are the end points of the numerical range. In the specification and the claims, the singular forms (a, an, the) include plural references unless the context clearly dictates otherwise. Thus, for example, an expandable particle includes two or more expandable particles. Unless clearly stated otherwise herein or the context clearly contradicts, singular forms are intended to include the plural references. Further, unless the context clearly indicates otherwise, the upper and lower values of all range limitations disclosed in the specification and claims are intended to independently combinable with each other so as to define sub-ranges contained therein.

The method for producing expandable polyamide-based resin particles (hereinafter also simply referred to as "expandable particles") of the present invention includes impregnating polyamide-based resin particles (hereinafter also simply referred to as "resin particles") with an inorganic physical blowing agent in a gas phase. It is important that the polyamide-based resin particles have a water content of 2.5% by mass or more and contain 0.5 to 10% by mass of carbon black. By using the resin particles having a water content and a carbon black content within specific ranges, it is possible to produce expandable particles in which the blowing agent is uniformly impregnated into the inside thereof. The method for producing polyamide-based resin expanded beads (hereinafter also simply referred to as "expanded beads") includes heating and expanding the expandable particles. The obtained expanded beads have uniform cells formed throughout the beads and have a high closed cell content and a small apparent density.

The resin particles, the expandable particles obtained from the resin particles and the expanded beads obtained from the expandable particles each include a polyamide-based resin. The polyamide-based resin may be a single kind of resin or a mixed resin of two or more kinds. Examples of the polyamide-based resin include polyamide and polyamide copolymers, with polyamide copolymers being preferred. Such polyamides include homopolymers such as, for example, poly(6-aminohexanoic acid), also known as poly(caprolactam) (polycaproamide, nylon 6), poly(laurolactam) (nylon 12), poly(hexamethylene adipamide) (nylon 66), poly(7-aminoheptanoic acid) (nylon 7), poly(8-aminooctanoic acid) (nylon 8), poly(9-aminononanoic acid) (nylon 9), poly(10-aminodecanoic acid) (nylon 10), poly(11-aminoundecanoic acid) (nylon 11), poly(hexamethylene sebaamide) (nylon 610), poly(decamethylene sebaamide) (nylon 1010), poly(hexamethylene azeramide) ) (nylon 69), poly(tetramethylene adipamide) (nylon 46), poly(tetramethylene sebacamide) (nylon 410), poly(pentamethylene adipamide) (nylon 56) and poly(pentamethylene sebacamide (nylon 510).

The polyamide copolymer means a copolymer that has two or more types of repeating units, with at least a part of the repeating units each having an amide bond. Examples of the polyamide copolymer include polycaproamide/polyhexamethylene adipamide copolymer (nylon 6/66), caprolactam/hexamethylene diamino adipic acid/lauryllactam (nylon 6/66/12) and caprolactam/lauryl lactam copolymer (nylon 6/12).

In the present invention, these polyamides and polyamide copolymers may be used singly or in combination of two or more. Among the above-mentioned polyamide-based resins, from the viewpoint of excellent foamability, a polyamide-based resin that is one or a combination of two more selected from nylon 6, nylon 66, nylon 6/66/12 and nylon 6/66 is preferred, with nylon 6/66 being more preferred. Further, from the same viewpoint, the polyamide copolymer is preferably a random copolymer in which different kinds of amides repeat at random.

It is preferred that the polyamide-based resin has a melting point of 180°C or higher, more preferably 185°C or higher, still more preferably 190°C or higher, in order to increase the heat resistance of the finally obtained expanded beads or expanded beads molded article. On the other hand, in order to reduce the load on the equipment used for heating expandable polyamide-based resin particles impregnated with an inorganic physical blowing agent with a heating medium, the melting point is preferably 280°C or lower, more preferably 260°C or lower, still more preferably 240°C or lower, particularly preferably 220°C or lower.

Incidentally, when the polyamide-based resin constituting the resin particles is composed of a single kind of a polyamide-based resin, the melting point of the polyamide-based resin refers to the melting point of that polyamide-based resin. When the resin particles are constituted of a mixture of two or more kinds of polyamide-based resins, the melting point of the polyamide-based resin refers to the melting point of the mixture that has been kneaded in advance using, for example, an extruder.

The melting point of the polyamide-based resin is measured in accordance with JIS K7121(1987). Specifically, a polyamide-based resin sample is heated and melted with heat flux differential scanning calorimetry at a heating rate of 10°C/min from 30°C to a temperature higher by 30°C than a melting end temperature (first time heating), then maintained at that temperature for 10 minutes, then cooled to 30°C at a cooling rate of 10°C/min, and thereafter heated again at a heating rate of 10°C/min to a temperature higher by 30°C than a melting peak end temperature to obtain a second time heating DSC curve. A peak top temperature (melting peak temperature) of the melting peak of the second heating DSC curve is defined as the melting point. When the DSC curve has a plurality of melting peaks, the melting point is the peak top temperature of the melting peak having the largest area. The polyamide-based resin used for the measurement is made to have a water content of 1000 mass ppm or less. A high-sensitive differential scanning calorimeter "EXSTAR DSC7020" (manufactured by SII Nano Technology Inc.) may be used as the measurement apparatus.

It is preferred that a flexural modulus of the polyamide-based resin is 1000 MPa or more, more preferably 1050 MPa or more, still more preferably 1100 MPa or more, particularly preferably 1200 MPa or more. When the flexural modulus of the polyamide-based resin is within this range, the polyamide-based resin hardly contracts even when exposed to room temperature after having been expansion, so that expanded beads having a low apparent density may be easily obtained. The upper limit of the flexural modulus of the polyamide-based resin is generally about 3000 MPa. Incidentally, an amide elastomer generally has a flexural modulus of approximately 600 MPa or less.

The flexural modulus of polyamide-based resin is measured in accordance with JIS K7171(2016). The polyamide-based resin used for the measurement is made to have a water content of 1000 mass ppm or less.

The density of the polyamide-based resin is preferably 1050 kg/m$^3$ or more, more preferably 1100 kg/m$^3$ or more. On the other hand, the upper limit is approximately 1300 kg/m$^3$, preferably 1200 kg/m$^3$. Incidentally, the density of the amide elastomer is approximately less than 1050 kg/m$^3$. The density of the polyamide-based resin may be determined based on the method described in ISO1183-3.

The resin particles used in the method of the present invention may contain other polymers such as thermoplastic resins other than polyamide-based resins and thermoplastic elastomers, as long as they do not adversely affect the objects and effects of the present invention. Examples of other thermoplastic resins include polyethylene resins, polypropylene resins, polystyrene resins, vinyl acetate resins, thermoplastic polyester resins, acrylic ester resins, methacrylic ester resins and polyphenylene sulfide resins. Examples of the thermoplastic elastomer include a styrene thermoplastic elastomer, an olefin thermoplastic elastomer and an amide thermoplastic elastomer. The content of the other polymer is preferably 30 parts by mass or less, more preferably 20 parts by mass or less, still more preferably 10 parts by mass or less, yet still more preferably 5 parts by mass or less, particularly preferably 0, based on 100 parts by mass of the resin particles in a dry state. That is, it is particularly preferable that the resin particles do not substantially contain any polymer other than the polyamide-based resin.

In addition, the resin particles may be added, as necessary, with customarily used additives such as, for example, a cell controlling agent, a terminal blocking agent, an antistatic agent, a conductivity imparting agent, a weatherability agent, a lubricant, an antioxidant, an ultraviolet absorber, a flame retardant, a metal deactivator a colorant (a pigment, a dye, etc.), a crystal nucleating agent and a filler. Examples of the cell controlling agent include inorganic controlling agents such as talc, sodium chloride, calcium carbonate, and silica, titanium oxide, gypsum, zeolite, borax, aluminum hydroxide, alum and carbon, and organic cell controlling agent such as phosphoric acid compounds, amine compounds and polytetrafluoroethylene (PTFE). The addition amount of these various additives varies depending on the purpose of use of the resulting molded articles, but is preferably 25 parts by mass or less, more preferably 15 parts by mass or less, and still more preferably 10 parts by mass, particularly preferably 5 parts by mass or less, based on 100 parts by mass of the resin particles. The above-mentioned optional components (other polymers and additives) are added and mixed and kneaded with the polyamide-based resin in the process of producing resin particles.

As described above, the method for producing expandable particles of the present invention includes impregnating the resin particles having a water content of 2.5% by mass or more and containing 0.5 to 10% by mass of carbon black with an inorganic physical blowing agent in a gas phase.

In a preferred embodiment of the present invention, the resin particles are obtained by a method including (a) a carbon black-containing polyamide-based resin pellet producing step in which carbon black-containing polyamide-based resin pellets are produced, and (b) a moistening step of moistening the obtained carbon black-containing polyamide-based resin pellets. The expandable particles may be obtained by carrying out a blowing agent impregnation step (c) in which the moistened resin particles obtained in the moistening step (b) are impregnated with an inorganic physical blowing agent in a gas phase. Further, the expanded beads may be obtained by performing a foaming step (d) of heating the expandable particles. The carbon black-containing polyamide-based resin pellet producing step (a), moistening step (b), blowing agent impregnation step (c) and foaming step (d) will be explained in detail below.

Carbon black-containing polyamide-based resin pellet producing step (a):

A preferred method for producing carbon black-containing polyamide-based resin pellets (hereinafter also simply referred to as CB-containing pellets) is as follows. First, a polyamide-based resin, carbon black and optional additives such as a cell controlling agent and an end capping agent, which are blended as necessary, are melted and kneaded using an extruder to obtain a melt-kneaded product. The melt-kneaded material is then extruded into a strand through a small hole of a die attached to the tip of an extruder, the strand being then cut into pellets having a predetermined size to obtain CB-containing pellets. The method for cutting the extruded melt-kneaded product may be, for example, a strand cutting method in which the extruded strand-shaped melt-kneaded product is cooled in water and cut into a predetermined weight using a pelletizer; a hot cut method in which the melt-kneaded product is cut immediately after extrusion into a gas phase, and an underwater cut method (UWC method) in which the melt-kneaded product is cut immediately after extrusion in water.

In the present invention, it is necessary that the resin particles have a water content of 2.5% by mass or more and, additionally, contain a predetermined amount of carbon black as described above. By containing a predetermined amount of carbon black in the resin particles, the blowing agent is able to be impregnated into inside of the resin particles more uniformly as compared with a case where resin particles in a moistened state do not contain carbon black. As a result, the obtained expanded beads are foamed sufficiently in the inside thereof and, hence, more uniform cells are formed throughout the expanded beads. Further, expanded beads having a high closed cell content and a low apparent density may be obtained more easily.

Carbon black is a material generally used as a coloring agent. Although the reason why carbon black exhibits the above-mentioned distinctive effects is not clear, it is inferred that the reason for this is that impregnation efficiency of the blowing agent into the moistened resin particles is increased by containing carbon black in the resin particles, that the viscoelasticity of the resin particles becomes in such a state to facilitate the foaming by containing a predetermined amount of carbon black and water, and that the nucleation effect of carbon black functions well to act as starting points of foaming by appropriate plasticization of the polyamide-based resin which is in a moistened state.

The content of carbon black in the resin particles is 0.5 to 10% by mass. When the carbon black content is excessively small, it will be difficult to uniformly impregnate the blowing agent into the resin particles and, hence, there is a possibility that the uniformity of the cell diameters of the resulting expanded beads is deteriorated. For this reason, the content is preferably 1% by mass or more, more preferably 1.5% by mass or more, still more preferably 2% by mass or more. When the content of carbon black is excessively large, on the other hand, there is a possibility that the moldability may deteriorate. For this reason, the content is preferably 8% by mass or less, more preferably 5% by mass or less, still more preferably 4.5% by mass or less, particularly preferably 3% by mass or less. The upper and lower limit values of the above ranges may be arbitrarily combinable so as to define preferred ranges of the content. Thus, the preferred carbon black content ranges are, for example, 1 to 10% by mass, 1.5 to 10% by mass, 2 to 8% by mass, 0.5 to 8% by mass, 1.5 to 8% by mass, 1 .5 to 4.5% by weight and 2 to 3% by weight.

"Carbon black content" as used in the present specification and claims refers to the percentage of carbon black in the CB-containing pellets based on the mass of the CB-containing pellets, and may be determined from the amount of carbon black blended at the time of producing the CB-containing pellets. The "carbon black content" may be also defined as the content thereof based on the mass of "resin particles in a dry state". As used herein, "resin particles in a dry state" refers to a state of the resin particles having a water content of less than 2.5% by mass.

The production method and composition of the carbon black are not particularly limited. For example, channel black, roller black, furnace black, thermal black, acetylene black, Ketjen black may be used. Further, these carbon blacks may be subjected to hydrophilization, hydrophobilization, oxidization, reduction, acidification, basification or organization treatment. Furnace black is preferred as the carbon black from the viewpoint of excellent dispersibility in the polyamide-based resin.

The dibutyl phthalate (i.e., DBP) oil absorption of the carbon black is preferably less than 150 mL/100 g, more preferably 130 mL/100 g or less, still more preferably 110 mL/100 g or less, for reasons of improvement of the impregnation efficiency of the blowing agent into the resin particles in a moistened state. The lower limit of the oil absorption is preferably 80 mL/100 g. The DBP oil absorption is a value as measured according to ASTM D2414-79.

The BET specific surface area of the carbon black is preferably 200 m$^2$/g or less, more preferably 150 m$^2$/g or less, still more preferably 100 m$^2$/g or less for the same reason as above. The lower limit thereof is preferably 50 m$^2$/g. The BET specific surface area of the carbon black is a value as measured by the BET method according to ASTM D-3037.

The carbon black may be selected from those listed above. The carbon black is preferably blended with the polyamide-based resin in the form of a masterbatch, since the carbon black can be more uniformly dispersed in the polyamide-based resin. The concentration of the carbon black in the masterbatch is preferably 10% by mass or more and 80% by mass or less, more preferably 30% by mass or more and 60% by mass or less. The base resin of the masterbatch may be a resin other than the polyamide-based resin.

Moistening step (b):

In the moistening step, the CB-containing pellets obtained in step (a) are moistened to obtain resin particles having a water content of 2.5% by mass or more. In the specification and claims, the term "moistening" refers to a process of impregnating the CB-containing pellets with water or water vapor to obtain resin particles having a desired water content of 2.5% or more.

When polyamide-based resin particles in a dry state with a water content of less than 2.5% by mass are used, it is difficult to impregnate the inorganic physical blowing agent sufficiently into the inside of the resin particles and, hence, there is a possibility that such resin particles become difficult to foam and expand. Even if expanded beads are obtained, there is a possibility that unfoamed portions may remain inside the expanded beads or that the cell diameters may become considerably non-uniform.

Moistening may be achieved using any generally known means as long as it is capable of adjusting the water content of the resin particles to a desired range. There may be used, for example, a first moistening method in which the CB-containing pellets are allowed to stand in standard conditions (e.g., 1 atm, temperature 23°C, humidity 50%) for 12 hours or more, preferably 24 hours or more; a second moistening method in which the CB-containing pellets are allowed to stand in high temperature and humidity conditions (a temperature higher than 23°C, e.g., 40°C, and a humidity higher than 50%, e.g., 80%) for at least 3 hours, preferably at least 5 hours; a third moistening method in which CB-containing pellets are immersed in water and allowed to quiescently stand for, for example, 10 seconds to 4 hours; a fourth moistening method in which the CB-containing pellets are placed in a bag or container together with water and stirred or mixed by hand or mechanically; and a fifth moistening method in which the CB-containing pellets are sprayed with water by showering or spraying. These first to fifth moistening methods may also be carried out in combination as appropriate.

According to these moistening methods, the water content of the entire resin particles can be adjusted to a desired range while suppressing variation in the water content among the obtained resin particles. As a consequence, in the blowing agent impregnation step (c) described below, the blowing agent may be impregnated sufficiently into the inside of the resin particles even in a short time and/or under a low temperature condition.

The first method is suitable for obtaining the resin particles with a water content of about 2.5% by mass to 4% by mass. The second to fourth methods are suitable for obtaining the resin particles having a water content of 4% by mass or more, or 4.5% by mass or more. The second or third moistening method is preferable in that the resin particles having a uniform water content are able to be obtained in a shorter time. In the first and second moistening methods, the CB-containing pellets are moistened in a room maintained under predetermined conditions with resin particles contained in an open or unsealed container, bag, tray, etc.

It is preferred that the water content of the resin particles is 3.0% by mass or more, more preferably 4.0% by mass or more, still more preferably 4.5% by mass or more, yet more preferably 5.0% by mass or more, particularly preferably 8.0% by mass or more, because the resin particles can be impregnated with the inorganic physical blowing agent sufficiently into the inside thereof in the blowing agent impregnation step (c) following the moistening step (b). The upper limit of the water content is not particularly defined, but is generally 20% by mass. In order to make it difficult for the expandable particles obtained in the blowing agent impregnation step (c) to be blocked in the foaming step (d), the upper limit is preferably 18% by mass or less, more preferably 16% by mass or less. The above upper and lower limit values of the water content may be arbitrarily combinable to define a preferred range of the water content. Thus, the preferred range of water content of the resin particles is, for example, 3 to 20% by mass, 4.5 to 20% by mass, 5 to 20% by mass, 5 to 18% by mass, 8 to 20% by mass, 8 to 18% by mass and 8 to 16% by mass.

In the present invention, the water content of the resin particles may be measured using a halogen moisture meter as a measuring device. A specific example of the measuring device is a halogen moisture meter (HX204) manufactured by METTLER TOLEDO, in which the water content is measured on the basis of heating with a halogen lamp.

Specifically, the water content of the resin particles may be measured as follows. First, about 2.0 g of the resin particles are sampled, and moisture adhering to the surface of the resin particles is removed by wiping with a wiper such as paper or cloth to obtain a resin particle sample. The sample is measured for the weight ($W_0$) thereof and placed in a halogen moisture meter. Next, the sample is heated to a temperature of 100°C and maintained at 100°C for 60 seconds until no weight change occurs. Thereafter, the sample is further heated to 160°C and maintained at 160°C for 90 seconds until no weight change occurs to obtain a water-free sample. The water-free sample is measured for its weight ($W_1$). The percentage (($W_0 - W_1$)/$W_0 \times 100$) (%) of the weight loss of the sample due to heating based on the weight of the sample before heating is defined as the water content (%). The water content of the polyamide film, which will be described hereinlater, is determined by the same method as the water content of the resin particles, except that the weight of the measurement sample is about 0.5 g.

In the present invention, it is possible to efficiently impregnate the physical blowing agent into the resin particles. The reason for this is considered to be because the gas barrier properties of the polyamide-based resin deteriorate when the resin is in a moistened state. In the case of polyolefin resins, polystyrene resins, etc. that are generally used as the base resin for expanded beads, such a phenomenon that the gas barrier properties of the resin in a moistened state deteriorate does not occur.

Whilst impregnation of polyamide-based resin pellets with an inorganic physical blowing agent in a gas phase has been conventionally carried out, it has now been found that there is a problem that the productivity is low. The present inventors have investigated the cause of this problem and found that a polyamide-based resin has significantly higher gas barrier properties than polyolefin resins such as polypropylene resin and, hence, it is difficult to impregnate the resin particles with a blowing agent. That is, due to high gas barrier properties of the polyamide-based resin, it is difficult to impregnate a blowing agent into the resin when an attempt is made to impregnate the resin with the blowing agent in the gas phase. As a result, when the obtained expandable particles are heated and foamed, an unfoamed portion may remain in the center region of the expanded beads so that a large variation in cell diameter may occur. Furthermore, when steam is used as the heating medium, it is difficult in itself to foam the expandable beads.

In this circumstance, the process of impregnating polyamide-based resin pellets with an inorganic physical blowing agent has conventionally been carried out under a high pressure for a long time or under a high temperature condition.

The present inventors have found that when a polyamide-based resin contains a significant amount of water, the gas barrier properties thereof decrease and impregnation with an inorganic physical blowing agent may be promoted. Specifically, it has been found that by setting the carbon black content of polyamide-based resin particles within a specific range and by controlling the water content thereof to above a specific value, impregnation of the blowing agent into the resin particles in the gas phase is promoted. The present invention has been completed based on these findings.

In addition, as will be described hereinafter, it has been found that the temperature at a storage modulus change point of the resin particles in the moistened state, which is determined by dynamic viscoelasticity measurement using the dynamic mechanical analysis (DMA), tends to be lower than that of the polyamide-based resin particles before moisture absorption (i.e., CB-containig pellets). At a temperature equal to or higher than the temperature at a storage modulus change point, the gas barrier properties of the polyamide-based resin particles decrease. Therefore, when the temperature at a storage modulus change point is lower than room temperature, the blowing agent may be more efficiently impregnated into the CB-containing pellets even under, for example, relatively low temperature conditions, such as room temperature. Similarly, the blowing agent may be effectively impregnated into the CB-containing pellets even in a short period of time. As a result, the resin particles obtained by moistening the CB-containing pellets may be easily impregnated with a large amount of the blowing agent.

The resin particles may be resin particles with a single layer structure, or may be multilayer resin particles with a multilayer structure. The multilayer structure refers to a structure that has a core layer and a cover layer that covers the core layer, with the core layer and the cover layer being made of polyamide-based resins having different properties. The multilayer resin particles, when expanded in the foaming step described hereinafter, give expanded beads having a foamed core layer in a foamed state and a cover layer covering the foamed core layer. When the resin particles are multilayer resin particles, it is preferred that the polyamide-based resin constituting the coating layer has a melting point (Tms) lower than the melting point (Tmc) of the core layer, more preferably lower than the melting point (Tmc) by 20°C or more, since it is possible to improve the fusion bonding properties between the expanded beads while maintaining heat resistance. In order to suppress peeling between the cover layer and the core layer, [(Tmc)-(Tms)] is preferably 40°C or lower. Furthermore, in order to improve the fusion bonding properties, it is also preferred that the cover layer of the expanded beads is in a non-foamed state. The non-foamed state may include a state where cells have disappeared after foaming and a state in which cells are partly present in the layer.

The multilayer resin particles may be produced by using multilayer CB-containing pellets. The multilayer CB-containing pellets may be obtained by conventional methods. For example, in the above CB-containing pellet manufacturing step (a), a polyamide-based resin, carbon black and optional components blended as necessary are melt-kneaded in a first extruder to form a core layer-forming melt, while a melt for forming the cover layer is prepared in a second extruder. Then these melts are introduced into a third extruder equipped with a die for forming two-layer strand, where they are combined in the die. The combined stream is extruded in the form of a strand having two layers through a small hole of a jig attached to the tip of the extruder and the extruded strand is cut.

The ratio of the length L of the resin particles to the diameter D of the resin particles (aspect ratio L/D) is preferably 1.1 or more, more preferably 1.2 or more. When the aspect ratio L/D of the resin particles is within this range, the impregnation efficiency of the inorganic physical blowing agent in a gas phase may be further improved in the blowing agent impregnation step described below. The upper limit of the aspect ratio L/D is 2.5, more preferably 2.0, still more preferably 1.5, since the obtained are able to be efficiently filled into a mold in the in-mold molding of expanded beads, which will be described hereinafter.

The aspect ratio L/D of the resin particles may be determined as follows. Randomly selected 50 resin particles obtained in the moistening step are measured for the maximum length L of each resin particle and the maximum width D of the resin particle in the direction normal to the direction of the maximum length L using, for example, a caliper, and the ratio L/D is calculated. The arithmetic mean of the L/D values of the 50 resin particles is defined as the aspect ratio of the resin particles. The maximum length L of the resin particles is usually about 1.5 to 2.1 mm, preferably 1.6 to 1.8 mm.

Incidentally, the aspect ratio L/D of the resin particles is almost the same as the aspect ratio of the CB-containing pellets. Therefore, the aspect ratio of the resin particles may be controlled by adjusting the discharge speed of the kneaded melt extruded from the small hole of the die, the take-up speed of the strand, etc. in the CB-containing pellet producing step.

Blowing agent impregnation step (c):

In the blowing agent impregnation step (c), the resin particles having a water content of 2.5% by mass or more and a carbon black content of 0.5 to 10% by mass are impregnated with an inorganic physical blowing agent (hereinafter also simply referred to as a blowing agent).

The expandable particles obtained by impregnating resin particles with a blowing agent according to the method of the present invention are impregnated with the blowing agent sufficiently into the inside thereof. Therefore, by heating the expandable particles using a heating medium such as hot air or an oil bath, it is possible to obtain expanded beads with a high closed cell content, uniform closed cells distributed throughout thereof, and a low apparent density. Further, even when the expandable particles are expanded using steam as a heating medium, expanded beads with a small apparent density are able to be obtained.

In the blowing agent impregnation step (c), the resin particles are placed in, for example, a pressure resisting vessel, and a blowing agent is injected under pressure to impregnate the resin particles with the blowing agent in the gas phase to obtain expandable particles.

Examples of the blowing agent include carbon dioxide, nitrogen, helium, argon and air. Above all, carbon dioxide or air is preferred, and carbon dioxide is more preferred, because of its small influence on the environment, nonflammablility and excellent safety.

The impregnation efficiency of the blowing agent into the resin particles described above is strongly influenced by the impregnation temperature, water content of the resin particles and carbon black content of the resin particles.

In the blowing agent impregnation step (c), it is preferred that the resin particles are impregnated with the blowing agent at a temperature higher than the temperature at a storage modulus change point (hereinafter also referred to simply as change point temperature). That is, in the blowing agent impregnation step (c), it is preferable to set the temperature in the pressure resisting vessel, in which impregnation is performed, higher than the temperature at the change point of the storage modulus of the resin particles because the impregnation efficiency of the blowing agent is improved.

That is, the change point temperature of the storage modulus (hereinafter also simply referred to as change point temperature) determined from the dynamic viscoelasticity measurement of resin particles is suitably usable as an index for setting the impregnation temperature in the blowing agent impregnation step (c).

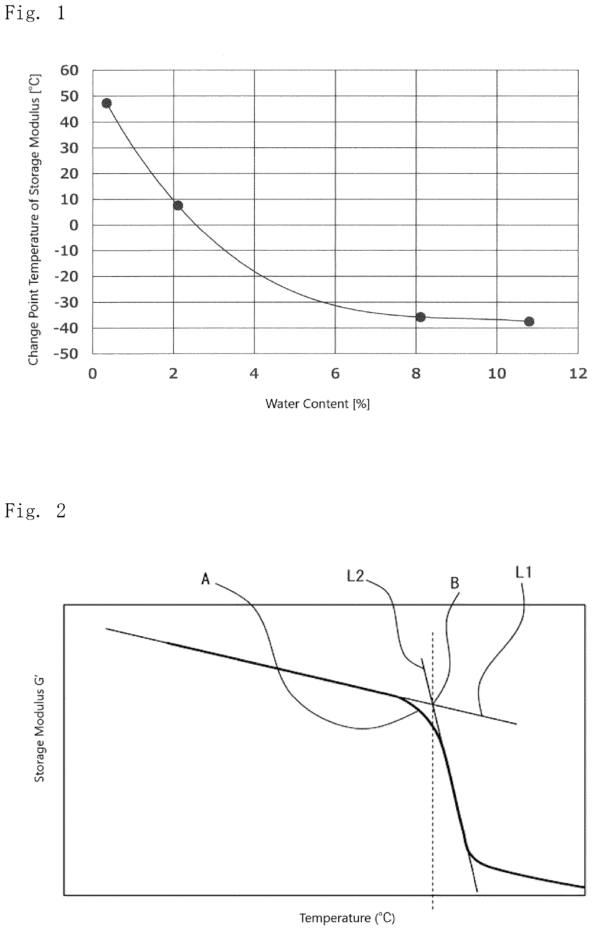

FIG. 1 is a graph plotting the relationship between the water content and the change point temperature, with the horizontal axis representing the water content of a film made from the resin particles and the vertical axis representing the change point temperature. As shown in FIG. 1, the higher the water content of the resin particles, the lower the change point temperature. Further, at a temperature higher than the change point temperature, the gas barrier properties of the resin particles are reduced. Therefore, if the temperature is higher than the change point temperature of the resin particles, the gas barrier properties of the resin particles will be reduced, so that the blowing agent can be more efficiently impregnated into the resin particles.

Incidentally, according to dynamic viscoelasticity measurement using dynamic mechanical analysis (DMA), the loss modulus of elasticity and loss tangent may be determined in addition to the storage modulus. Among these physical property values, the change point temperature of the storage modulus is the lowest temperature at which a change in molecular motion of the resin material to be measured begins to occur (the modulus of elasticity changes). When the temperature is higher than the change point temperature, the blowing agent is able to be sufficiently impregnated into the resin particles at a low temperature (for example, room temperature) and/or in a short time. Therefore, in the present invention, the change point temperature of the storage modulus of the resin particles is employed as an index for determining the lower limit temperature that enables efficient impregnation of the blowing agent into the resin particles.

The change point temperature of the resin particles refers to the change point temperature of the storage modulus determined by dynamic mechanical analysis (DMA) (glass transition temperature determined from the storage modulus curve against temperature) according to JIS K7095(2012).

Since it is difficult to perform DMA using resin particles as such as a sample, the resin particles are formed into a film sample. A relational expression between the change point temperature of the film sample and the water content is determined by DMA measurement, and the change point temperature of the resin particles is calculated from the relational expression. That is, the change point temperature of the resin particles is determined as follows. The CB-containing pellets, from which the resin particles to be measured are prepared, are used. The CB-containing pellets are divided into a plurality of groups. These groups of the CB-containing pellets are moistened in different conditions to obtain plural groups of resin particles having different water contents. Respective groups of resin particles are formed into films having different water contents. Each of the films is measured for its water content and storage modulus. Based on the obtained measurement results, a relationship between the water content and the change point temperature is plotted with the water content on the horizontal axis and the change point temperature on the vertical axis (for example, FIG. 1). Next, using the diagram, a relational expression that holds between the water content and the change point temperature is determined. On the other hand, the water content of the resin particles for which the change point temperature is to be determined is measured. From the obtained measured value, the change point temperature of the resin particles is determined by calculation using the relational expression.

More specifically, the relationship between the water content of the resin particles and the change point temperature of the target resin particles is determined as follows. Plural groups of resin particles having different water contents obtained as described above are compressed using a heat press heated to 210°C to obtain films with a size of 100 mm long, 100 mm wide and 0.4 mm thick having different water contents. From each film, film samples S1 (length 40 mm, width 50 mm and thickness 0.4 mm) for measuring the water content and film samples S2 (length 40 mm, width 5 mm and thickness 0.4 mm) for measuring the storage modulus are cut out. The water content of each film sample S1 is measured by the method described above. The storage modulus of each film sample S2 is measured as follows. The film sample S2 is fixed with a jig and measured for its storage modulus while increasing the temperature from -80°C to 130°C at a rate of 2°C/min in tension mode at a constant frequency (1 Hz). Then, the measurement results are plotted with the storage modulus on the vertical axis and the temperature on the horizontal axis to obtain a temperature-storage modulus graph A as exemplified in FIG. 2. As the DMA device, a viscoelasticity measuring device DMA7100 manufactured by Hitachi High-Tech Science Co., Ltd. for example, may be used.

In the graph of FIG. 2, a straight line L1 that extends toward the high temperature side from a straight line portion before the first sudden decrease of the storage modulus intersects, at the intersection B, with a straight line L2 that extends toward the low temperature side after first sudden decrease of the storage modulus. The temperature of the intersection B is defined as the change point temperature of the storage elastic modulus. When multiple change point temperatures appear, the change point temperature on the lowest temperature side is adopted. The DMA measurement is performed on 10 samples S2 obtained from films having the same water content, and the arithmetic mean value of the obtained 10 temperature change measurements is taken as the change point temperature of the storage modulus of the film.

The above measurement is performed on multiple films with different water contents, and the change point temperature of each film is determined. The change point temperature is plotted as a function of the water content. FIG. 1 shows an example of a graph showing the relationship between the water content and the change point temperature, where the water content is plotted on the horizontal axis and the change point temperature is plotted on the vertical axis. Based on this graph, a relational expression between water content and change point temperature is determined. The change point temperature of the desired resin particles is determined by measurement of the water content thereof and calculation from the obtained water content value using the relational expression.

Next, the relationship between the water content and the impregnation efficiency of the blowing agent will be explained. The higher the water content of the resin particles, the higher is the impregnation efficiency of the blowing agent. Moreover, the higher the water content of the resin particles, the lower is the change point temperature of the resin particles. Therefore, the resin particles may be efficiently impregnated with the blowing agent even at a low temperature, or the time for impregnating the resin particles with the blowing agent may be shortened without increasing the temperature. From this point of view, the water content of the resin particles is preferably 3.0% by mass or more, as described previously.

On the other hand, the water content of the resin particles is not specifically limited. However, the upper limit of the water content is generally 20% by mass, since as the water content increases, the degree of decrease in the change point temperature is lowered and an equilibrium state is reached as shown in FIG. 1. Further, since as the water content increases, the blocking is apt to occur in the foaming step, the upper limit of the water content is preferably 18% by mass or less, as described above.

The reason why the higher the water content of the resin particles, the lower is the change point temperature of the storage modulus, is considered that the presence of water molecules weakens the intermolecular interaction attributed to hydrogen bonding between the molecules of the polyamide-based resin and, hence. the molecular motion of the polyamide-based resin changes.

In the blowing agent impregnation step (c), it is preferable to adjust the temperature inside the pressure resisting vessel to be higher than the change point temperature of the storage modulus of the resin particles, as described above. Further in order to impregnate the resin particles with the blowing agent more efficiently, the temperature inside the pressure resisting vessel is preferably adjusted to a value higher than the change point temperature of the resin particles over a period of more than 50% of the total time of the blowing agent impregnation step. As used herein the term "total time of the blowing agent impregnation step" refers to the time from the start of the blowing agent impregnation step until the completion of taking out the expandable particles out of the pressure resisting vessel.

Furthermore, the term "start of the blowing agent impregnation step" refers to a point in time at which the state where the water content of the resin particles charged into the pressure resisting vessel reaches 2.5% by mass or more and the state where the blowing agent is injected into the pressure resisting vessel are both established for the first time. In this case, either the time point in which the water content of the resin particles reaches 2.5% by mass or more or the time point in which the injection of the blowing agent is started may occur first. Specifically, for example, a blowing agent may be injected after the resin particles with a water content of 2.5% by mass or more have been charged in a pressure resisting vessel. Alternately, the resin particles with a water content of less than 2.5% by mass may be first charged in a pressure resisting vessel container and, after the inorganic physical blowing agent has been injected in the pressure resisting vessel, a treatment to increase the water content of the resin particles in the pressure resisting vessel to 2.5% by mass or more may be performed at an arbitrary timing. The "period of more than 50% of the total time of the blowing agent impregnation step" may be a continuous period of time in the entire implementation period, or may be the sum of intermittent periods of time.

In order to impregnate a larger amount of a blowing agent more efficiently, it is preferred that a period of time during which the temperature inside the pressure resisting vessel is kept higher than the storage change point temperature of the resin particles during the blowing agent impregnation step is 70% or more, more preferably 80% or more, particularly preferably 90% or more, most preferably substantially 100%, of the total impregnation time.

During a period of time which exceeds 50% of the total impregnation time of the above-described blowing agent impregnation step, the temperature inside the pressure resisting vessel may be adjusted at a constant value or may be varied. Incidentally, during the blowing agent impregnation step, the water content of the resin particles may change over time so that the change point temperature may change accordingly. Therefore, the change point temperature of the resin particles, which is an index for setting the temperature inside the pressure vessel, changes with the change in the water content of the resin particles inside the pressure vessel. Therefore, it is desirable to take a sample of the resin particles from the pressure resisting vessel during the blowing agent impregnation step and measure their water content, as necessary, and it is desirable to determine the change point temperature from the measured water content and adjust the temperature inside the pressure resisting vessel to be equal to or higher than the change point temperature.

As described above, the change point temperature of resin particles in a moistened state is lower than that of resin particles in a dry state. Therefore, the blowing agent impregnation step (c) in the method of the present invention can be performed at a lower temperature and/or in a shorter time as compared with a case where resin particles in a dry state are used. As a result, it is possible to reduce the load on devices such as pressure resisting vessels and to improve the productivity. Further, discoloration due to deterioration of the resin may be suppressed.

The temperature inside the pressure resisting vessel in the blowing agent impregnation step is not particularly limited, but as described above, it is desirable to impregnate the blowing agent at a temperature higher than the change point temperature of the resin particles. In order to easily manage the impregnation temperature, it is preferable to impregnate the resin particles with the blowing agent at a temperature higher than the change point temperature of the resin particles at the start of the blowing agent impregnation step.

Furthermore, during the blowing agent impregnation step, the water content of the resin particles in a moistened state in the pressure resisting vessel may gradually decrease, so that the change point temperature of the resin particles tends to increase. To cope with this point, the temperature inside the pressure resisting vessel may be set high in advance at the start of the blowing agent impregnation process, so that, even if the change point temperature increases, the resin particles may be sufficiently impregnated with an inorganic physical blowing agent without any particular problem. Furthermore, the impregnation efficiency of the blowing agent may be further improved and, hence, it is possible to shorten the impregnation time of the blowing agent and to increase the impregnation amount of the blowing agent.

More specifically, the impregnation temperature of the blowing agent is more preferably equal to or higher than a temperature that is higher by 10°C, still more preferably equal to or higher than a temperature that is higher by 25°C, yet still more preferably equal to or higher than a temperature that is higher by 30°C, particularly preferably equal to or higher than a temperature that is higher by 45°C, than the change point temperature at the start of the blowing agent impregnation step. On the other hand, in order to reduce the load on devices such as pressure resisting vessels, the temperature of the blowing agent impregnation step is preferably equal to or lower than a temperature that is higher by 100°C, more preferably equal to or lower than a temperature that is higher by 80°C, still more preferably equal to or lower than a temperature that is higher by 75°C, particularly preferably equal to or lower than a temperature that is higher by 70°C, than the change point temperature at the start of the blowing agent impregnation step.

In the present invention, it is most preferred that, for more than 50% of the total execution time of the blowing agent impregnation step, the temperature inside the pressure resisting vessel in the blowing agent impregnation step is set to be higher by at least 30°C than the change point temperature at the start of the blowing agent impregnation step. For example, when the change point temperature of the resin particles at the start of the blowing agent impregnation step is -10°C, it is preferred that the temperature inside the pressure resisting vessel in the blowing agent impregnation process is set to 20°C or higher and is maintained at 20°C or higher for more than 50% of the total execution time of the blowing agent impregnation process.

In the present invention, in the early stage of the blowing agent impregnation step, it is more preferred that the temperature inside the pressure resisting vessel is adjusted to be higher than the change point temperature of the storage modulus of the resin particles in a moistened state. The early stage of the blowing agent impregnation step, as used herein, refers to the time from the start to the elapse of 5% of the total implementation time of the blowing agent impregnation step, preferably the time up to the elapse of 3%, more preferably the time up to the elapse of 1%, most preferably the point in time at the start of the blowing agent impregnation step.

Further, it is more preferred that the impregnation of the inorganic physical blowing agent is commenced at a temperature higher by 30°C or more than the change point temperature at the early stage of the blowing agent impregnation step and is maintained continuously at that temperature until the final stage of the blowing agent impregnation step. The final stage of the blowing agent impregnation step, as used herein, refers to the time from elapse of 95% to elapse of 100%, preferably from elapse of 97% to elapse of 100%, more preferably from elapse of 99% to elapse of 100%, of the total time of the blowing agent impregnation step from the start thereof.

The upper limit of the temperature of the blowing agent impregnation step is not specifically specified and may be determined in consideration of the relationship with other conditions such as the water content of the resin particles and the blowing agent impregnation time. However, from the viewpoint of reducing the load on the devices and suppressing discoloration due to resin deterioration, the impregnation temperature in the blowing agent impregnation step is preferably 150°C or lower, more preferably 120°C or lower, still more preferably 100°C or lower, yet still more preferably 80°C or lower, particularly preferably 50°C or lower, most preferably 30°C or lower.

Next, the pressure inside the pressure resisting vessel in the blowing agent impregnation step will be explained. The pressure inside the pressure resisting vessel into which the resin particles are charged increases as the blowing agent is injected. As a result, the resin particles are impregnated with the blowing agent. The relationship between injection of the blowing agent and adjustment of the temperature inside the pressure resisting vessel is not particularly limited. The injection of the blowing agent and adjustment of the temperature may be started at the same time, or either one may be started first. The temperature adjustment may be started first, and the injection of the blowing agent may be started after the temperature reaches a predetermined temperature. Incidentally, the rate of increasing the pressure of the blowing agent injected into the pressure resisting vessel is not particularly limited.

The pressure inside the pressure resisting vessel increases as the blowing agent is injected. The pressure inside the pressure resisting vessel is not specifically limited, but is preferably in the range of 2.0 MPa(G) or more and 6.0 MPa(G) or less, more preferably in the range of 3.0 MPa(G) or more and 5.0 MPa(G) or less. It is preferred that the pressure inside the pressure resisting vessel is kept constant during the entire period of the blowing agent impregnation step. However, the pressure inside the pressure resisting vessel may be varied.

As a result of the blowing agent impregnation step (c), expandable resin particles that may be foamed by being heated are obtained.

In the blowing agent impregnation step, the blowing agent may be impregnated into the resin particles in a gaseous state or may be impregnated into the resin particles in a liquid state. However, from the viewpoint of further increasing the impregnation efficiency of the blowing agent, it is preferred that part or all of the blowing agent is impregnated into the resin particles in a gaseous state. It is more preferable that all of the blowing agent is impregnated into the resin particles in a gaseous state. Further, from the viewpoint of ensuring that the blowing agent is maintained in a gaseous state to further increase the impregnation efficiency into the resin particles, it is preferred that the blowing agent is heated in advance to a temperature equal to or higher than the impregnation temperature and then injected into the pressure resisting vessel.

(d) Foaming step

The foaming step is a step of heating and foaming the expandable particles obtained in the above-described blowing agent impregnation step to obtain expanded polyamide-based resin beads. The foaming step (d) is preferably carried out as soon as possible after the blowing agent impregnation step (c) described above.

The method of heating the expandable particles is not specifically limited. For example, there may be mentioned a method in which the expandable particles are heated by supplying high temperature air (hot air foaming), a method in which the expandable particles are heated by being immersed in high temperature oil (oil bath foaming) and a method in which the expandable particles are heated by feeding steam (steam foaming). Further, the expandable particles may be heated using, for example, high frequency waves and infrared rays. By heating the expandable particles using hot air or an oil bath, it is possible to obtain expanded polyamide-based resin beads having a low apparent density and uniform closed cells formed throughout them. Since such expanded beads are obtainable more easily, the temperature of the hot air supplied during the hot air foaming is preferably 180 to 300°C, more preferably 200 to 280°C, still more preferably 220 to 250°C. Further, for the same reasons, the temperature of the hot air supplied during the hot air foaming is, on the basis of the melting point of the polyamide-based resin constituting the resin particles, preferably between a temperature that is higher by 10°C than the melting point and a temperature that is higher by 100°C than the melting point, more preferably between a temperature higher by 20°C than the melting point and a temperature higher by 80°C than the melting point.

In the past, when an attempt was made to produce expanded beads by supplying steam as a heating medium to foamable particles, foaming itself was occasionally difficult. According to the present invention, on the other hand, expanded beads with low apparent density are able to be produced even when steam is used as the heating medium. From the viewpoint of capability to obtain such expanded beads more easily, the temperature of the steam supplied in steam foaming is preferably 100 to 180°C, more preferably 120 to 150°C.

The foaming step may be performed under pressure. The pressure in this case is not specifically limited, but may be adjusted within the range of about 0.03 to 0.4 MPa, for example. Further, the heating time may be, for example, in the range of 5 to 120 seconds.

The expanded bead of the present invention has a plurality of cells and is constituted of a polyamide-based resin and carbon black, with the carbon black being contained therein in an amount of 0.5% by mass or more and 10% by mass or less based on 100% by mass of the expanded bead. The expanded bead has an apparent density of 100 kg/m$^3$ to 800 kg/m$^3$, a closed cell content of 80% or more, an average cell diameter D of the entire cells thereof, and an average cell diameter Dc in the center region of thereof, in which Dc/D is 0.7 to 1.3.

The apparent density of the expanded bead is 800 kg/m$^3$ or less, more preferably 750 kg/m$^3$ or less, still more preferably 600 kg/m$^3$ or less, yet still more preferably 550 kg/m$^3$ or less, particularly preferably 500 kg/m$^3$ or less. By molding such expanded beads in a mold, it is possible to obtain a polyamide-based resin expanded beads molded article with excellent lightweight properties. The lower limit of the apparent density of the obtained expanded beads is not specifically limited, but is generally 100 kg/m$^3$, preferably 200 kg/m$^3$, still more preferably 300 kg/m$^3$. It is possible to produce expanded beads (two-stage expanded beads) having an even lower apparent density by further applying internal pressure to the expanded beads and heating them for the purpose of further reducing the weight thereof.

The apparent density of expanded bead is measured by the following method. About 500 cm$^3$ of the expanded beads are sampled and measured for the weight Wp thereof. The expanded beads whose weight Wp has been measured are immersed in a measuring cylinder containing water at a temperature of 23°C using a wire mesh. With the consideration of the volume of the wire mesh, the volume Vp [cm$^3$] of the expanded beads is measured by reading of the rise in the water level. The weight Wp [g] of the expanded beads is divided by the volume Vp (Wp/Vp) with appropriate conversion of unit to [kg/m$^3$], to obtain the apparent density of the expanded beads. The expanded beads used for measurement are aged in an oven at 80 C for 12 hours, followed by slow cooling to a dry state.

It is preferred that the closed cell content of the expanded beads of the present invention is 70% or more, more preferably 80% or more. When the closed cell content falls within this range, the moldability of the expanded beads becomes better and, hence, the expanded beads molded article obtained by molding the expanded beads in a mold has excellent surface properties and fusion bonding properties.

The closed cell content may be determined using an air comparison hydrometer based on Procedure C described in ASTM-D2856-70. The expanded beads used for measurement are aged in an oven at 80°C for 12 hours and then slowly cooled to a dry state.

The average cell diameter D of the expanded beads of the present invention is preferably 50 to 300 $\mu$m, more preferably 80 to 250 $\mu$m, still more preferably 100 to 200 $\mu$m, from the viewpoint of moldability of the expanded beads.

The average cell diameter D of the expanded beads may be determined in the following manner. First, one of the expanded beads is cut into nearly equal halves such that the cutting plane passes through an approximate center thereof. One of the cross-section is photographed by a scanning electronic microscope such that the cross-section completely appears in the photograph. On the photographed image, eight line segments, extending radially from a center portion of the photographed image to the periphery thereof and angularly nearly equally spaced apart from each other (by an angle of nearly 45 degrees), are drawn. Then a total number of the cells that intersect the eight line segments is counted and a total length of the eight line segments is measured. The measured total length is divided by the counted total number of the cells to obtain a cell diameter of the expanded bead. Similar procedures are repeated for randomly-selected 10 expanded beads. The arithmetic mean of the cell diameters of the ten expanded beads is defined as the average cell diameter D of the expanded beads.

It is also preferred that the ratio (Dc/D) of the average cell diameter Dc at a center region of the expanded beads to the average cell diameter D of the expanded beads is preferably 0.7 to 1.3, more preferably 0.8 to 1.2. The fact that the ratio (Dc/D) falls within this range means that a uniform cell structure is formed throughout the expanded beads.

The average cell diameter Dc of the cells positioning in the center region of the expanded beads may be determined in the following manner. First, one of the expanded beads is cut into nearly equal halves such that the cutting plane passes through a center portion thereof. One of the cross-section is photographed by a scanning electronic microscope such that the cross-section completely appears in the photograph. On the photographed image, the shortest line segment is drawn from an approximate center point of the image to a periphery (cell membrane) of each of the cells located near the center point. Among the cells existing near the center, 10 cells are selected in order of the smallest value of the shortest lines from the approximate center to the periphery. Next, a rectangle that circumscribes each of the 10 selected cells is drawn and the short and long sides of each of the rectangles are measured and averaged to obtain a cell diameter of each cell. The cell diameters of the selected ten cells are averaged to obtain a cell diameter of the cells positioning in the center region of the expanded bead. Similar procedures are repeated for randomly selected 10 expanded beads. The arithmetic mean of the cell diameters of the cells positioning in the center region of the ten expanded beads is defined as the average cell diameter Dc of the cells positioning in the center region of the expanded beads.

The expanded beads having a closed cell content of 80% or more and a Dc/D ratio of 0.7 to 1.3 may be easily obtained by heating the expandable particles produced by the method of the present invention with hot air or an oil bath as a heating medium.

A polyamide-based resin expanded beads molded article (hereinafter also simply referred to as an expanded beads molded article or a molded article) may be produced using the expanded beads of the present invention. In the molded article, a multiplicity of the expanded beads of the present invention are mutually fusion bonded together. The method for producing the molded article is not specifically limited, and conventionally known methods may be employed. For example, an in-mold molding method may be mentioned as a preferred method for producing the molded article. Particularly preferred is an in-mold molding method using steam. According to this method, the polyamide-based resin constituting the expanded beads is plasticized with the steam and, hence, it is possible to lower the molding pressure during in-mold molding. The obtained molded article has excellent lightness in weight and high heat resistance.

In the in-mold molding method, any known method may be employed as a method for filling the expanded beads into the mold. There may be used, for example, a method in which the expanded beads are pressurized with a pressurized gas to apply a predetermined internal pressure into the inside of the cells thereof (pressure pretreatment molding) while preventing the secondary expansion power of the expanded beads from excessively increasing with the consideration of the fusion bonding properties of the expanded beads in the expanded beads molded article, a method in which the expanded beads that have been compressed with a pressurized gas are filled in the mold into a pressurized mold and then the pressure in the mold is released (compression filling), and a method in which the mold is opened in advance to increase the molding space before filling the expanded beads into the mold and, after filling them in the mold, the mold is closed to mechanically compress the expanded beads (cracking filling).

The molded article obtained from the expanded beads of the present invention has high heat resistance, excellent abrasion resistance, chemical resistance and, additionally, excellent tensile strength and fusion bonding properties between expanded beads. Therefore, the molded article may be advantageously used as, for example, automobile parts and electrical products.

Examples

The following non-restrictive examples will further illustrate the invention.

Examples 1 to 4 and Comparative Examples 1 to 4

CB-containing pellet producing step (a):

A polyamide 6/66 copolymer (polyamide 6/polyamide 66 = 85/15; "UBE Nylon 5033B" manufactured by Ube Industries, Ltd., melting point 197 °C, density 1,140 kg/m$^3$, flexural modulus 1,300 MPa, MFR 3.5 g /10 minutes) as a polyamide-based resin, 5.6% by mass a masterbatch (the base resin is an acrylonitrile-styrene copolymer; the carbon black content in the masterbatch is 45% by mass), 8,000 ppm by mass of "Talcan Powder PK-S" (manufactured by Hayashi Kasei Co., Ltd.) as a cell controlling agent and 10,000 ppm by mass of "Stabaxol P" (manufactured by Rhein Chemie Inc.) as an end capping agent were fed to an extruder and melt kneaded. The kneaded mixture was extruded from the extruder in the form of a strand. After having been cooled in water, the strand was cut with a pelletizer so that l/d was 1.2, and dried to obtain pellets with an average weight per pellet of 2 mg. The obtained pellets were dried at a temperature of 100°C and a humidity of 23% for 12 hours to obtain CB-containing pellets (resin particles in the dry state) containing 2.5% by weight of carbon black. In Comparative Examples 2 and 3, carbon black was not added.

Measurement of melting point of the polyamide-based resin:

The polyamide-based resin was placed in a desiccator to avoid hydrolysis by avoiding high temperature and high humidity conditions, and vacuum suctioned under a nitrogen atmosphere to reduce the water content to 1000 ppm by mass or less. The obtained polyamide-based resin was used as a measurement sample. In accordance with JIS K7121(1987), the melting point of the polyamide-based resin was determined by the method described previously using a differential scanning calorimeter "EXSTAR DSC7020" (manufactured by SII Nanotechnology Inc.). Specifically, according to the heat flux differential scanning calorimetry, the sample was heated and melted at a heating rate of 10°C/min from 30°C to a temperature higher by 30°C than the end of the melting peak (first temperature increase), then maintained at that temperature for 10 minutes, cooled to 30°C at a cooling rate of 10°C/min, and heated again at a heating rate of 10°C/min to a temperature higher by 30°C than the end of the melting peak to obtain a second DSC curve. The temperature at the apex of the melting peak of the obtained DSC curve (melting peak temperature) was determined as the melting point of the polyamide-based resin.

Moistening step (b):

The CB-containing pellets obtained in the above step (a) as a feedstock were moistened in different manners shown below to obtain resin particles having the water contents shown in Tables 1 and 2. Namely, in Examples 1, 3 and 4, the moistening was carried out by completely immersing the CB-containing pellets in water at 15°C contained in a vessel for a period of time shown in Tables 1 and 2 (aforementioned third moistening method). In Example 2 and Comparative Example 3, the moistening was carried out by allowing the CB-containing pellets to quiescently stand in conditions involving a temperature of 23°C and a relative humidity of 50% for a period of time shown in Table 1 (aforementioned first moistening method). In Comparative Examples 1, 2 and 4, the moistening was carried out by allowing the CB-containing pellets to quiescently stand in conditions involving a temperature of 80°C and a relative humidity of 23% for a period of time shown in Tables 1 and 2. The obtained resin particles were measured for their water contents. Further, from the obtained water content values, change point temperatures of the storage modulus thereof were calculated from relational expressions shown hereinafter. The results were as shown in Tables 1 and 2.

Blowing agent impregnation step (c):

The resin particles (180 g) having the water content shown in Tables 1 and 2 were fed to a pressure resisting vessel having a volume of 3 L and set at the impregnating temperature shown in Tables 1 and 2. Tables 1 and 2 also show the difference between the impregnating temperature and the change point temperature of the storage modulus of the resin particles (impregnating temperature - change point temperature). Simultaneously with the closing of the pressure resisting vessel containing the resin particles, carbon dioxide as a blowing agent was injected to impregnate the resin particles with the blowing agent at the impregnating temperature shown in Tables 1 and 2. The pressure in the pressure resisting vessel (blowing agent impregnating pressure) of carbon dioxide as the blowing agent was maintained constant at 4.0 MPa (G). Tables 1 and 2 show the impregnating time (the period of time from when the blowing agent was injected until when the resin particles impregnated with the blowing agent were taken out from the pressure resisting vessel). The impregnating temperature was maintained constant at the temperatures shown in Tables 1 and 2. Immediately after the impregnation time shown in Tables 1 and 2 had elapsed, the expandable particles impregnated with carbon dioxide were taken out from the pressure resisting vessel.

Foaming step (d):

Using the expandable particles impregnated with carbon dioxide as a blowing agent, expanded beads were produced as follows. In Examples 1 to 3 and Comparative Examples 1 to 3, 180 g of expandable particles impregnated with carbon dioxide were foamed and expanded by blowing hot air at the temperature shown in Table 1 as a heating medium for a period of time shown in Table 1 to obtain expanded beads. The obtained expanded beads were aged in an oven at 80°C for 12 hours, and then slowly cooled to obtain expanded beads in a dry state. In Example 4 and Comparative Example 4, steam was used in lieu of hot air. That is, steam at the temperature shown in Table 2 as a heating medium was blown onto the foamable particles for the time shown in Table 2 to cause foaming.

In Examples 1 to 3 and Comparative Examples 1 to 3, the resin particles were measured for their change point temperature and L/D, while the expanded beads in a dry state obtained by hot air foaming were measured for their apparent density, expansion ratio, closed cell content, average cell diameter D and cell diameter Dc at the center thereof. The results are shown in Table 1. Further, the expanded beads obtained in Examples 1 to 3 were observed for their appearance. The evaluation is shown in Table 1. The expanded beads obtained in Comparative Examples 1 and 2 had extremely poor expansion state and had many unexpanded portions. Thus, the average cell diameter was difficult to measure and the measurement was not carried out. Furthermore, the appearance of the expanded beads obtained in Comparative Examples 1 to 3 was not evaluated.

Table 1

| | Example | 1 | 2 | 3 | | | |
|---|---|---|---|---|---|---|---|
| | Comparative Example | | | | 1 | 2 | 3 |
| CB-Containing pellet producing step | Carbon black content [wt%] | 2.5 | 2.5 | 2.5 | 2.5 | - | - |
| Moistening step | Moistening time [h] | 4 | 168 | 6 | 24 | 24 | 168 |
| | Water content of Resin particles [mass %] | 10.2 | 3.8 | 13.8 | 0.31 | 0.18 | 4.3 |
| | Relational expression | (1) | (1) | (1) | (1) | (2) | (2) |
| | Change point temperature [°C] | -37 | -16 | -49 | 48 | 46 | -13 |
| | LID ratio of resin particles | 1.2 | 1.2 | 1.2 | 1.2 | 1.2 | 1.2 |
| Blowing agent impregnation step | Impregnation temperature [°C] | 23 | 23 | 23 | 23 | 23 | 23 |
| | Impregnation time [h] | 24 | 24 | 6 | 24 | 24 | 24 |
| | Impregnation temperature - Change point temperature [°C] | 60 | 39 | 72 | -25 | -23 | 36 |
| | Carbon dioxide pressure [MPa(G)] | 4.0 | 4.0 | 4.0 | 4.0 | 4.0 | 4.0 |
| Foaming step | Heating method | hot air | hot air | hot air | hot air | hot air | hot air |
| | Heating medium temperature [°C] | 240 | 240 | 240 | 240 | 240 | 240 |
| | Heating time [s] | 30 | 30 | 30 | 30 | 30 | 30 |

(continued)

| Example | | | 1 | 2 | 3 | | | |
|---|---|---|---|---|---|---|---|---|
| Expanded beads | Apparent density [kg/m³ ] | | 390 | 530 | 450 | 1020 | 930 | 700 |
| | Expansion ratio [times] | | 4.6 | 3.4 | 4.1 | 1.7 | 1.9 | 2.6 |
| | Closed cell content [%] | | 87 | 80 | 83 | 33 | 66 | 81 |
| | Average cell diameter D[μm] | | 140 | 220 | 130 | - | - | 165 |
| | Cell diameter of center portion Dc[μm] | | 140 | 330 | 140 | - | - | 255 |
| | Dc/D | | 1.0 | 1.2 | 1.1 | - | - | 1.5 |
| | Appearance | | good | good | good | - | - | - |

Furthermore, the expanded beads in a dry state obtained in Example 4 and Comparative Example 4 by steam foaming as described above were measured for their apparent density and expansion ratio. The results are shown in Table 2.

Table 2

| | | Example 4 | Comparative Example 4 |
|---|---|---|---|
| CB-Containing pellet producing step | Carbon black content [wt%] | 2.5 | 2.5 |
| Moistening step | Moistening time [h] | 6 | 24 |
| | Water content of resin particles [mass %] | 11.5 | 0.44 |
| | Relational expression | (1) | (1) |
| | Change point temperature [°C] | -39 | 45 |
| | UD ratio of resin particles | 1.2 | 1.2 |
| Blowing agent impregnation step | Impregnation temperature [°C] | 23 | 23 |
| | Impregnation time [h] | 24 | 24 |
| | Impregnation temperature - Change point temperature [°C] | 62 | -22 |
| | Carbon dioxide pressure [MPa(G)] | 4.0 | 4.0 |
| Foaming step | Heating method | steam | steam |
| | Heating medium temperature [°C] | 135 | 135 |
| | Heating time [s] | 30 | 30 |
| Expanded Beads | Apparent density [kg/m³ ] | 720 | 1120 |
| | Expansion ratio [times] | 2.5 | 1.6 |

In Table 1, the physical properties of the polyamide-based resin particles and polyamide-based resin expanded beads were measured by the following methods.

Aspect ratio LID of resin particles:

Each of 50 randomly selected resin particles obtained in the moistening step was measured with a caliper for its maximum length L and maximum width D in the direction perpendicular to the direction of the maximum length L and a ratio LID was calculated. The arithmetic mean of the LID values of the 50 resin particles was taken as the aspect ratio of the resin particles.

Water content of the resin particles:

The water content of the resin particles was measured using a halogen moisture meter. As the measuring device, "Halogen Moisture Meter (HX204) manufactured by METTLER TOLEDO" which measures the water content based on halogen lamp heating, was used. The measurement was performed according to the method described previously. Specifically, first, about 2.0 g of resin particles were sampled. The water adhering to the surfaces of the resin particles was removed by wiping with Kimwipe manufactured by Nippon Paper Crecia Co., Ltd., to obtain a measurement sample. The sample was measured for its weight and placed in the halogen moisture meter. The sample was then heated to a temperature of 100°C and maintained at 100°C for 60 seconds until no weight change occurred. The sample was further heated to 160°C and maintained at 160°C for 90 seconds until no weight change occurred. The dried sample was measured for its weight. The percentage of the weight loss of the sample due to heating based on the weight of the sample before heating was defined as the water content (%). The water content of the polyamide film, which will be described later, was determined in the same manner as the water content of the polyamide-based resin particles, except that the weight of the test piece was 0.5 g.

Method for measuring a temperature at a storage modulus change point of the resin particles changes:

The temperature at a storage modulus change point of the resin particles was measured by dynamic mechanical analysis (DMA) with reference to JIS K7095(2012). As the DMA measurement device, a viscoelasticity measurement device DMA7100 manufactured by Hitachi High-Tech Science Co., Ltd. was used. The CB-containing pellets obtained in step (a) above were moistened in various different ways to obtain four groups of resin particles with different water contents. Each group was compressed with a heat press heated to 210°C to obtain four polyamide films with a length of 100 mm, a width of 100 mm and a thickness of 0.4 mm. From each polyamide film, one film sample S1 (length 40 mm × width 50 mm × thickness 0.4 mm) for determining the water content of the polyamide film and ten film samples S2 (length 40 mm × width 5 mm × thickness 0.4 mm) for determining the temperature at storage modulus change point of the polyamide film were cut out. The water content of film sample S1 was measured by the method described above. On the other hand, each film sample S2 was fixed with a jig of the viscoelasticity measuring device. The temperature was raised from -80°C to 130°C at a rate of 2°C/min in tensile mode at a constant frequency (1 Hz) to conduct DMA measurement. Next, as illustrated in FIG. 2, the measurement results were plotted with the storage modulus on the vertical axis and the temperature on the horizontal axis to create a graph A showing the relationship between temperature and storage modulus. In FIG. 2, the temperature at the intersection B between a straight line L1 that extends toward the high temperature side from a straight line portion before the first sudden decrease of the storage modulus and a straight line L2 that extends toward the low temperature side after first sudden decrease of the storage modulus was taken as the temperature at a storage modulus change point. The above procedures were performed on 10 film samples S2, and the arithmetic mean value of the obtained change point temperatures was defined as the temperature at storage modulus change point of the corresponding polyamide film.
The above measurement of the change point temperature was performed on four polyamide films made from the four resin particle groups with different water contents. By plotting the measured values of the water content of the polyamide film on the horizontal axis and of the storage modulus on the vertical axis, a graph showing the relationship between the water content and the change point of the storage modulus was formed. The obtained graph is shown in FIG. 1. From FIG. 1, the following relational expression (1) was determined. Then, from the water content values of the resin particles of Examples 1 to 4 and Comparative Examples 1 and 4, the change point temperature of the storage modulus was calculated using the relational expression (1).

$$Y = -0.115x^3 + 3.1758x^2 - 29.636x + 57.014 \quad (1)$$

wherein

y: change point temperature (°C) of storage modulus of the polyamide-based resin particles
x: water content (%) of the polyamide-based resin particles.

With regard to the change point temperature of the storage modulus of the resin particles containing no carbon black, the relational expression (2) between the water content and the change point of the storage modulus was also obtained in the same manner as above. Then, the change point temperature of the storage modulus was calculated from the water content values of the resin particles of Comparative Examples 2 and 3 using the relational expression (2).

$$Y = -0.089x^3 + 2.3776x^2 - 23.146x + 49.619 \quad (2)$$

Apparent density of the expanded beads:

Measurement was performed by the method described previously. Specifically, the expanded beads were first aged in an oven at 80°C for 12 hours and then dried with slow cooling. Approximately 500 $cm^3$ of the dried expanded beads were sampled and measured for their weight Wp [g]. The expanded beads were immersed in a measuring cylinder containing water at a temperature of 23°C using a wire mesh. The volume Vp [$cm^3$] of the expanded beads was measured from the rise in water level while taking the volume of the wire mesh into consideration. The apparent density of the expanded beads was calculated by dividing the weight Wp of the expanded beads by their volume Vp (Wp/Vp) and converting the unit into [$kg/m^3$].

Expansion ratio of the expanded beads:

The expanded beads in a dry state were placed in a 1 L measuring cylinder up to the 1 L scale in a naturally sedimented state. The mass (W2 [g]) of the accommodated expanded beads was then measured. The bulk density [$kg/m^3$] of the expanded beads was determined by dividing the mass W2 [g] by the accommodated volume V2 (1 [L]) (W2/V2) with appropriate unit conversion. Subsequently, the expansion ratio [times] of the expanded beads was determined by dividing the density [$kg/m^3$] of the polyamide-based resin constituting the expanded beads by the bulk density [$kg/m^3$].

Closed cell content of the expanded beads:

The closed cell content was measured using an air comparison hydrometer based on Procedure C described in ASTM-D2856-70 and specifically determined as follows. The expanded beads in a dry state having a bulk volume of about 20 $cm^3$ were used as a measuring sample and accurately measured for the apparent volume Va thereof by the ethanol immersion method as described below. After thoroughly drying the measuring sample whose apparent volume Va was measured, the true volume Vx of the measuring sample was measured using Accupic II1340 manufactured by Shimadzu Corporation according to procedure C described in ASTM-D2856-70. Then, the closed cell content was calculated based on these volume values Va and Vx using the (5) shown below. The average value of the five samples (N=5) was taken as the closed cell content of the expanded beads.

$$\text{Closed cell content (\%)} = (Vx - W/\rho) \times 100/(Va - W/\rho) \qquad (5)$$

wherein:

Vx is a true volume of the expanded beads, which is measured by the above method, which corresponds to a sum of a volume of the resin constituting the expanded beads and a total volume of all the closed cells in the expanded beads (unit: $cm^3$), Va is an apparent volume of the expanded beads measured from a rise of the water level when the expanded beads are immersed in ethanol contained in a measuring cylinder (unit: $cm^3$),
W is a weight of the sample used for the measurement (unit: g), and
$\rho$ is a density of the resin constituting expanded beads (unit: $g/cm^3$).

Average cell diameter D of the expanded beads:

The average cell diameter D was determined by the method described previously. Specifically, one expanded bead was first bisected into approximately two equal halves along a plane passing through its center region, and one of the cut surfaces was photographed using a scanning electron microscope such that the entire cross section was included. Next, eight angularly equally spaced line segments (i.e., 45 degrees apart) extending radially from the approximate center of the obtained photographed image toward the outer peripheral surface of the expanded bead were drawn. Then, a number of the cells that intersect the eight line segments was counted. Also measured was a total length of the eight line segments. The measured total length was divided by the counted number of cells to determine cell diameter of the expanded bead. Similar procedures were repeated for 10 randomly selected expanded beads. The arithmetic mean of the cell diameters of the 10 expanded beads was defined as the average cell diameter D of the expanded beads.

Average cell diameter Dc in the center region of the expanded beads:

The method described above was adopted for the measurement. Specifically, an expanded bead was first bisected into approximately two equal halves along a plane passing through its center region, and one of the cut surfaces was photographed using a scanning electron microscope such that the entire cross section was included. On the photographed image, the shortest straight lines were drawn from the approximate center thereof to the peripheries (cell walls) of the cells present in the vicinity of the center portion, among which ten cells were selected in ascending order of the shortest lines. A rectangle circumscribing each of the ten selected cells was drawn. The length and width of each rectangle were measured and the average value of these values was taken as the cell diameter. The average value of the 10 cells determined was taken as the cell diameter at the center region of the expanded bead. Similar operations were performed on 10 randomly selected expanded beads. The arithmetic mean value of the cell diameters at the center region of the 10 expanded beads was defined as the average cell diameter Dc in the center region of the expanded beads.

Evaluation of surface appearance:

The surface appearance (evenness of color density) of the expanded bead is evaluated by sensory test. Evenness of color density is evaluated by assigning a score ranging from 1 (lowest score; color density unevenness is significant) to 5 (highest score; color density unevenness is none or inconspicious) with increments of 1 and an average score of the five panelists is calculated. When the calculated average score is 3.5 or more, the surface appearance of the expanded beads is evaluated to be good, with the average score of less than 3.5 being evaluated to be poor.

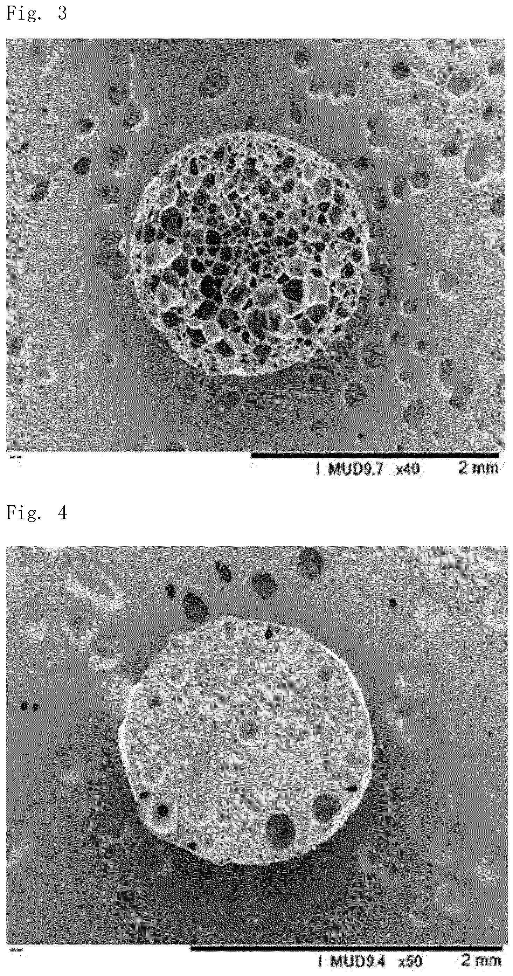

Example 1 is an example in which the expandable particles and expanded beads were produced using the resin particles having a carbon black content of 2.5% by mass and a water content of 10.2% by mass. Since the change point temperature of the resin particles was -37°C and the carbon black was contained therein, it was possible to obtain the expandable particles in which the blowing agent was uniformly impregnated inside thereof under the impregnation conditions of 23°C and 24 hours. By foaming the expandable particles with hot air, it was possible to obtain the expanded beads having a very good foamed state. FIG. 3 shows a cross-sectional photograph of this expanded bead.

Example 2 is an example in which the expandable particles and expanded beads were produced using the resin particles having a carbon black content of 2.5% by mass and a water content of 3.8% by mass. Since the change point temperature of the resin particles was -16°C and carbon black was contained therein, it was possible to obtain the expandable particles in which the blowing agent was uniformly impregnated inside thereof under the impregnation conditions of 23°C and 24 hours. By foaming the expandable particles with hot air, it was possible to obtain the expanded beads having an excellent foamed state.

Example 3 is an example in which the expandable particles and expanded beads were produced using resin the particles having a carbon black content of 2.5% by mass and a water content of 13.8% by mass. Since the change point temperature of the resin particles was -49°C and carbon black was contained therein, it was possible to obtain the expandable particles in which the blowing agent was uniformly impregnated inside thereof under the impregnation conditions involving a temperature of 23°C and a time of as short as 6 hours. By foaming the expandable particles with hot air, it was possible to obtain the expanded beads having an excellent foamed state.

Comparative Example 1 is an example in which the carbon black content was 2.5% by mass and the water content was as low as 0.31% by mass. Since the change point temperature of the resin particles was 48°C, it was not possible to obtain expandable particles satisfactorily impregnated with the blowing agent under the impregnation conditions of 23°C and 24 hours. When the expandable particles were expanded with hot air, the obtained expanded beads had a high apparent density and a low closed cell content. In addition, the expanded beads were considerably poor in a foaming state and, hence, it was impossible to measure the average cell diameter D and the cell diameter Dc in the center portion. FIG. 4 shows a cross-sectional photograph of this expanded bead.

Comparative Example 2 is an example in which carbon black was not blended and the water content was reduced to as low as 0.18% by mass. Since the change point temperature of the obtained resin particles was 46°C, the blowing agent was unable to be satisfactorily impregnated under the impregnation conditions of 23°C and 24 hours. When the expandable particles were expanded with hot air, the obtained expanded beads had a high apparent density and a low closed cell content. In addition, the foaming condition was poor and, hence, it was impossible to measure the average cell diameter D and the cell diameter Dc in the center portion.

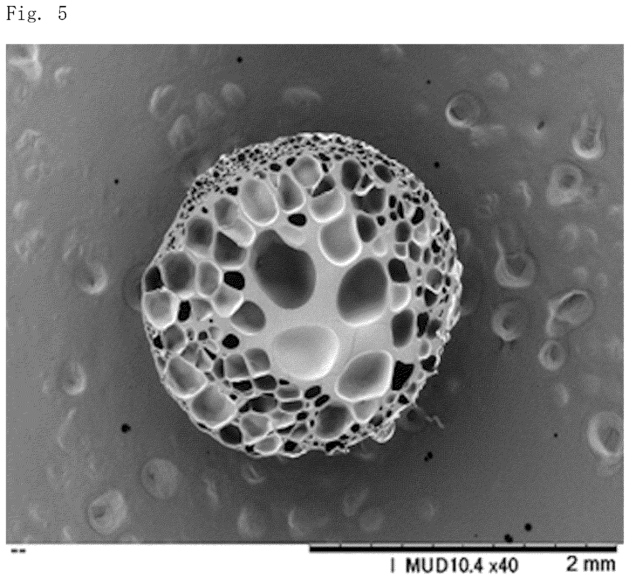

Comparative Example 3 is an example in which the expandable particles and expanded beads were produced using resin particles having a water content of 4.3% by mass and containing no carbon black. The change point temperature of the resin particles was -13°C. The expandable particles were obtained by impregnating the resin particles with a blowing agent under impregnation conditions of 23°C and 24 hours. The expanded beads were able to be obtained by foaming the expandable particles with hot air. However, because no carbon black was blended, the obtained expanded beads had a larger Dc/D than the expanded beads of Examples 1 to 3 and the uniformity of the cell diameter was poor. Additionally, the expansion ratio was somewhat low. FIG. 5 shows a cross-sectional photograph of this expanded bead.

Example 4 is an example in which the expanded beads were produced in the same manner as Example 3 except that steam was used as the heating medium. By steam foaming, expanded beads with a small apparent density were able to be obtained.

Comparative Example 4 is an example in which the expanded beads were produced in the same manner as Comparative Example 1 except that steam was used as the heating medium. The resin particles were hardly foamed and had a large apparent density.

Examples 5 to 8 and Comparative Examples 5 and 6

Example 1 was repeated in the same manner as in Example 1, except that the conditions of the CB-containing pellet producing step (a), moistening step (b), blowing agent impregnation step (c) and foaming step (d) were changed as shown in Table 3. In Table 3, the relational expression (3) when the carbon black content is 1.5% by mass and the relational expression (4) when the carbon black content is 5% by mass are as follows:

$$y = -0.0897x^3 + 2.4171x^2 - 22.613x + 43.016 \qquad (3)$$

$$y = -0.189x^3 + 4.6366x^2 - 36.404\,x + 58.521 \qquad (4)$$

where y represents the change point temperature of the storage modulus of the polyamide-based resin particles (°C) and
x represents the water content (%) of the polyamide-based resin particles.

The physical properties of the obtained resin particles and expanded beads are shown in Table 3. Since the expanded beads obtained in Comparative Examples 5 and 6 were in a significantly poor foamed state, it was difficult to measure their average cell diameter, and their appearance was not evaluated.

Table 3

| | Example | 5 | 6 | 7 | 8 | | |
|---|---|---|---|---|---|---|---|
| | Comparative Example | | | | | 5 | 6 |
| Resin particles producing step | Carbon black content [wt%] | 1.5 | 5.0 | 1.5 | 5.0 | 1.5 | 5.0 |
| Moistening step | Moistening time [h] | 24 | 24 | 168 | 168 | 24 | 24 |
| | Water content of Resin particles [mass %] | 15.2 | 15.2 | 2.67 | 2.76 | 0.22 | 0.31 |
| | Relational expression | (3) | (4) | (3) | (4) | (3) | (4) |
| | Change point temperature [°C] | -57 | -87 | 2 | -11 | 38 | 48 |
| | LID ratio of resin particles | 1.2 | 1.2 | 1.2 | 1.2 | 1.2 | 1.2 |
| Blowing agent impregnation step | Impregnation temperature [°C] | 23 | 23 | 23 | 23 | 23 | 23 |
| | Impregnation time [h] | 24 | 24 | 24 | 24 | 24 | 24 |
| | Impregnation temperature - Change point temperature [°C] | 80 | 110 | 21 | 34 | -15 | -25 |
| | Carbon dioxide pressure [MPa(G)] | 4.0 | 4.0 | 4.0 | 4.0 | 4.0 | 4.0 |
| Foaming step | Heating method | hot air | hot air | hot air | hot air | hot air | hot air |
| | Heating medium temperature [°C] | 240 | 240 | 240 | 240 | 240 | 240 |
| | Heating time [s] | 30 | 30 | 30 | 30 | 30 | 30 |

(continued)

| Example | | 5 | 6 | 7 | 8 | | |
|---|---|---|---|---|---|---|---|
| Expanded beads | Apparent density [kg/m³] | 430 | 490 | 590 | 650 | 1020 | 1030 |
| | Expansion ratio [times] | 4.1 | 3.7 | 3.1 | 2.8 | 1.7 | 1.7 |
| | Closed cell content [%] | 63 | 70 | 50 | 70 | 25 | 28 |
| | Average cell diameter D[μm] | 180 | 110 | 130 | 120 | - | - |
| | Cell diameter of center portion Dc[μm] | 200 | 140 | 180 | 170 | - | - |
| | Dc/D | 1.1 | 1.3 | 1.4 | 1.4 | - | - |
| | Appearance | good | good | good | good | - | - |

Explanation of the reference symbol

L1: Straight line extending toward the high temperature side from the straight portion before the first sudden decrease of the storage modulus;
L2: Straight line extending toward the low temperature side from the straight portion after the first sudden decrease of the storage modulus;
A: Change curve of the storage modulus against temperature change;
B: Intersection of the straight line L1 and straight line L2

**Claims**

1. A method for producing expandable polyamide-based resin particles,

   comprising impregnating polyamide-based resin particles with an inorganic blowing agent in a gas phase, wherein the polyamide-based resin particles have a water content of 2.5% by mass or more and contain carbon black in an amount of 0.5% by mass or more and 10% by mass or less.

2. The method according to claim 1, wherein said impregnating is carried out at a temperature higher than a temperature at a storage modulus change point of the polyamide-based resin particles.

3. The method according to claim 1 or 2, wherein said impregnating is carried out at a temperature that is higher by 30°C than a temperature at a storage modulus change point of the polyamide-based resin particles and is not higher than 120°C.

4. The method according to any one of claims 1 to 3, wherein said impregnating is carried out at a temperature not lower than 20°C and not higher than 120°C.

5. The method according to any one of claims 1 to 4, wherein the carbon black has a BET specific surface area of 50 m²/g or more and 200 m²/g or less.

6. The method according to any one of claims 1 to 5, wherein the polyamide-based resin particles have a water content of 5% by mass or more and 20% by mass or less.

7. The method according to any one of claims 1 to 6, wherein the polyamide-based resin particles are obtained by a process comprising the steps of:

   (a) providing carbon black-containing polyamide-based resin pellets having a carbon black content of 0.5% by mass or more and 10% by mass or less, and
   (b) moistening the carbon black-containing polyamide-based resin pellets to a water content of 2.5% by mass or more.

8. A method for producing polyamide-based resin expanded beads, comprising heating the expandable particles according to any one of claims 1 to 7 to foam and expand the expandable particles.

9. An expanded bead having a plurality of cells and comprising a polyamide-based resin and a carbon black,

said carbon black being contained in the expanded bead in an amount of 0.5% by mass or more and 10% by mass or less based on 100% by mass of the expanded bead,
said expanded bead having an apparent density of 100 kg/m$^3$ or more and 800 kg/m$^3$ or less, a closed cell content of 80% or more, an average cell diameter D of the entire cells of the expanded bead and an average cell diameter Dc of the cells positioning in the center region of the expanded bead,
wherein a ratio Dc/D is 0.7 or more and 1.3 or less.

10. The expanded bead according to claim 9 that is obtainable by the method according to claim 8.

Fig. 1

Fig. 2

Fig. 3

I MUD9.7 x40 2 mm

Fig. 4

I MUD9.4 x50 2 mm

Fig. 5

I MUD10.4 x40   2 mm

## INTERNATIONAL SEARCH REPORT

| International application No. |
| --- |
| **PCT/JP2023/008103** |

**A.    CLASSIFICATION OF SUBJECT MATTER**

*C08J 9/18*(2006.01)i
FI:    C08J9/18 CFG

According to International Patent Classification (IPC) or to both national classification and IPC

**B.    FIELDS SEARCHED**

Minimum documentation searched (classification system followed by classification symbols)

C08J9/00-9/42; B29C44/00-44/60; B29C67/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2011-105879 A (ASAHI KASEI CHEMICALS CORP.) 02 June 2011 (2011-06-02) claim 1, 8, paragraphs [0030], [0031], [0038], [0045] | 9-10 |
| A | | 1-8 |
| A | JP 2021-130739 A (JSP CORP.) 09 September 2021 (2021-09-09) paragraphs [0025], [0052]-[0055], [0090], [0100] | 1-10 |
| A | WO 2021/125264 A1 (ASAHI KASEI CORP.) 24 June 2021 (2021-06-24) paragraphs [0016], [0022], [0026], examples 9-14 | 1-10 |
| A | WO 2019/050032 A1 (SEKISUI PLASTICS CO., LTD.) 14 March 2019 (2019-03-14) claims 1-2, 4, paragraph [0055] | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 May 2023** | **23 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/008103** |

| Patent document<br>cited in search report | Publication date<br>(day/month/year) | Patent family member(s) | Publication date<br>(day/month/year) |
| --- | --- | --- | --- |
| JP 2011-105879 A | 02 June 2011 | (Family: none) | |
| JP 2021-130739 A | 09 September 2021 | US 2021/0253819 A1<br>paragraphs [0084], [0138]-[0148], [0204]-[0207], table 2<br>KR 10-2021-0105306 A<br>TW 202132441 A | |
| WO 2021/125264 A1 | 24 June 2021 | EP 4079796 A1<br>paragraphs [0028], [0036], [0044], [0045], examples 9-14<br>CN 114729148 A | |
| WO 2019/050032 A1 | 14 March 2019 | US 2020/0369862 A1<br>claims 1-2, 4, paragraph [0079]<br>EP 3683262 A1<br>CN 111051415 A<br>TW 201920386 A | |

Form PCT/ISA/210 (patent family annex) (January 2015)

**REFERENCES CITED IN THE DESCRIPTION**

**Patent documents cited in the description**

- WO 2020031803 A